# EUROPÄISCHE PATENTSCHRIFT

(11) **EP 2 861 915 B1**
(45) Veröffentlichungstag und Bekanntmachung des Hinweises auf die Patenterteilung: **08.03.2017**
(21) Anmeldenummer: 13718195.4
(22) Anmeldetag: 24.04.2013
(51) Int. Cl.: B60H 1/00, F24H 3/06, F24H 3/12, F24H 9/18, F24H 9/00, B60H 1/22

(54) **Zusatzheizeinrichtung für ein Kraftfahrzeug**
Additional heater for a vehicle
Dispositif chauffant additionel pour un véhicule

(30) Priorität: 12.06.2012 DE 102012012236; 14.11.2012 DE 102012022280
(43) Veröffentlichungstag der Anmeldung: 22.04.2015
(73) Patentinhaber: Volkswagen Aktiengesellschaft, 38440 Wolfsburg (DE)
(72) Erfinder: FISCHER, Sylvain, 38444 Wolfsburg (DE); RICHTER, Jörg, 38518 Gifhorn (DE); KONKIEL, Patrick, 39646 Oebisfelde (DE)
(86) Internationale Anmeldenummer: PCT/EP2013/058449
(87) Internationale Veröffentlichungsnummer: WO 2013/185962

(56) Entgegenhaltungen:
- EP-A2- 2 248 692
- US-A- 3 486 004
- US-A- 4 263 500
- US-A- 4 835 367
- US-A- 5 909 534

## Beschreibung

Die Erfindung bezieht sich auf eine Zusatzheizeinrichtung mit einem Infrarotstrahlermodul zur Abgabe gerichteter Infrarotstrahlung an seinem vorderen Modulende sowie einer erwärmten Luftströmung, umfassend
- einen elektrischen Infrarotemitter zur Erzeugung der Infrarotstrahlung,
- einen den Infrarotemitter seitlich umschließenden Infrarotreflektor zur Ausrichtung der von dem Infrarotemitter erzeugten Infrarotstrahlung in Richtung des vorderen Modulendes,
- ein den Infrarotreflektor seitlich umschließendes Gehäuse und
- ein hinter dem Infrarotemitter und dem Infrarotreflektor angeordnetes Gebläse zur Erzeugung einer das Gehäuses durchsetzenden Luftströmung.

Die Erfindung bezieht sich weiter auf eine besondere Verwendung eines solchen Infrarotstrahlermoduls.

Derartige Infrarotstrahlermodule sind bekannt aus der EP 2 248 692 A2. Diese Druckschrift offenbart ein Enteisungssystem für die Windschutzscheibe eines Kraftfahrzeugs. Das Enteisungssystem besteht aus einem oder mehreren auf die Windschutzscheibe gerichteten Modulen der vorgenannten Art. Zentraler Bestandteil dieser Module sind ein Infrarotemitter und ein diesen seitlich umgebender Infrarotreflektor. Der Reflektor ist ausgelegt, Infrarotstrahlung, die vom Infrarotemitter nicht in Richtung des vorderen Modulendes abgestrahlt wird, wenigstens teilweise in diese Richtung umzulenken. Der Infrarotemitter ist auf einem Sockel fixiert, der koaxial innerhalb des Reflektors angeordnet und von diesem über einen Ringspalt beabstandet ist. Hinter dem Sockel ist ein Gebläse angeordnet, mit welchem Luft durch den Spalt zum vorderen Modulende geblasen werden kann. Dieser Luftstrom umströmt den Infrarotemitter und wird nach außen von dem Infrarotreflektor, der die Form eines Venturi-Rohres aufweist, begrenzt. Diese Anordnung führt zur Aussendung von Infrarotstrahlung und eines erwärmten Luftstroms aus dem vorderen Ende des bekannten Infrarotstrahlermoduls. Dieses bekannte Infrarotstrahlermodul weist zwei wesentliche Nachteile auf. Zum einen verhindert der für den Luftstrom erforderliche Ringspalt zwischen Emittersockel und Reflektor eine optisch optimierte Ausgestaltung des Reflektors. Die Richtungskorrektur der nicht zum vorderen Modulende hin abgestrahlten Infrarotstrahlung erfolgt daher nur ungenügend. Dies führt zu unnötigen Leistungsverlusten und einer unnötigen Aufheizung des Moduls. Außerdem sind erhebliche Schutzmaßnahmen für den Infrarotemitter erforderlich. Da die Luftströmung den Infrarotemitter unmittelbar umspült, muss sie frei von Staub und Feuchtigkeit sein, die den stark aufgeheizten Emitter bei Betrieb beschädigen würden. Daher ist eine aufwendige Luftfilterung vor dem Gebläse erforderlich, wie dies in der genannten Druckschrift auch beschrieben ist. Bei Nicht-Betrieb ist der Infrarotemitter im Wesentlichen vom vorderen Ende des Moduls her der Verschmutzung durch Staub etc. ausgesetzt. Die genannte Druckschrift schlägt hierzu vor, das vordere Ende des Moduls mit einem sehr feinmaschigen Gitter zu versehen. Dieses muss jedoch noch ausreichend transparent für die Infrarotstrahlung und luftdurchlässig zum Durchlass der Luftströmung sein. Staubdichtigkeit einerseits und Luftdurchlässigkeit andererseits sind jedoch einander entgegenstehende Ziele, die höchstens im Rahmen eines suboptimalen Kompromisses vereinbar sind.

Auch aus der DE 100 46 216 A1 und der DE 198 08 571 A1 sind IR-Strahler bekannt, bei denen ein den Infrarotemitter unmittelbar umspülender Luftstrom innerhalb des Infrarotreflektors vorgesehen ist.

Schließlich offenbart die DE 10 2008 063 666 A1 eine Infrarot-basierte Nackenheizung für Kraftfahrzeuge, wobei diese Druckschrift jedoch keine Einzelheiten zur Luftführung im Bereich des Infrarotemitters offenbart.

Es ist die Aufgabe der vorliegenden Erfindung, eine gattungsgemäße Zusatzheizeinrichtung mit einem Infrarotstrahlermodul derart weiterzubilden, dass ein besserer Schutz des empfindlichen Infrarotemitters gewährleistet und der Reflektor optisch optimiert werden kann.

Diese Aufgabe wird in Verbindung mit den Merkmalen des Oberbegriffs von Anspruch 1 dadurch gelöst, dass der Infrarotemitter und der Infrarotreflektor als eine zum Gebläse hin luftundurchlässige Einheit verbunden sind und zwischen dem Infrarotreflektor und dem Gehäuse ein zum Moduläußeren offener, mit dem Gebläse strömungsleitend verbundener Spalt angeordnet ist.

Ein derartiges Infrarotstrahlermodul ist als Zusatzheizeinrichtung in einem Kraftfahrzeug vorgesehen.

Bevorzugte Ausführungsformen der vorliegenden Erfindung sind Gegenstand der abhängigen Ansprüche.

Die Erfindung nimmt Abstand von der im Stand der Technik üblichen Luftführung in unmittelbarer Umspülung des Infrarotemitters. Vielmehr werden Infrarotemitter und Infrarotreflektor als eine wenigstens von hinten luftundurchlässige Einheit konstruiert. Der vom Gebläse angetriebene Luftstrom umspült erfindungsgemäß den Reflektor außen. Hierzu ist zwischen dem Reflektor und dem diesen umgebenden Gehäuse ein entsprechender Luftspalt vorgesehen. Ein erster Vorteil dieser erfindungsgemäßen Ausgestaltung ist, dass der Reflektor im Hinblick auf seine optischen Eigenschaften hin optimiert werden kann. Insbesondere muss keine Reflektorfläche für den Luftspalt geopfert werden, sodass sämtliche nicht in Richtung des vorderen Modulendes emittierte Infrarotstrahlung aufgefangen und in ihrer Strahlungsrichtung korrigiert werden kann. Zudem muss die Formgebung des Reflektorinneren nicht an strömungstechnische Erfordernisse angepasst werden, sondern kann allein auf ihre optischen Eigenschaften hin konstruiert werden.

Ein weiterer Vorteil der Erfindung ist, dass kein unmittelbarer Kontakt zwischen der Luftströmung und dem Infrarotemitter zustande kommt. Daher müssen keine erhöhten Anforderungen an die Sauberkeit und Trockenheit der Luft gestellt werden, was sowohl Kosten- als auch Bauraumvorteile mit sich bringt. Es wird durch die Erfindung sogar möglich, wie bei einer besonders bevorzugten Ausführungsform vorgesehen, auch das vordere Ende des Reflektors mit einer für die von dem Infrarotemitter emittierte Infrarotstrahlung transparenten, aber vollständig luftundurchlässigen Scheibe zu verschließen. Es entsteht hierdurch eine vollständige, staubdichte Kapselung des Infrarotemitters.

Die entstehende Wärme kann bei geeigneter Materialwahl an den Reflektor abgegeben werden, der seinerseits durch die Luftumspülung gekühlt wird. Das Gehäuse ist über die Luftströmung gegen den Reflektor wärmeisoliert, sodass eine Aufheizung des Gehäuses zuverlässig verhindert wird. Bevorzugt ist der Spalt zwischen dem Gehäuse und dem Reflektor als ein den Infrarotreflektor umlaufender Ringspalt ausgebildet. Hierdurch wird die mögliche Spaltgröße optimiert und ein rotationssymmetrischer Luftstrom generiert.

Bezüglich der Strömungsrichtung sind zwei unterschiedliche Varianten denkbar. Bei einer ersten bevorzugten Ausführungsform ist vorgesehen, dass der Spalt vorne offen und das Gebläse derart betreibbar ist, dass innerhalb des Gehäuses eine auf das vordere Modulende gerichtete Luftströmung erzeugbar ist, sodass am vorderen Modulende eine mit der Infrarotstrahlung gleichgerichtete Luftströmung resultiert. Die von einem solchen Modul erzeugte konvektive Wärme und Strahlungswärme sind somit auf das gleiche Ziel, beispielsweise eine zu enteisende Scheibe oder ein Körperteil eines Fahrzeuginsassens gerichtet, ohne dass es zusätzlicher Luft- oder Strahlungsleitmaßnahmen bedürfte. Solche Module eignen sich daher besonders gut für die Nachrüstung, da sie lediglich einen leicht verlegbaren Spannungsanschluss benötigen.

Bei einer ebenfalls bevorzugten, alternativen Ausführungsform ist vorgesehen, dass das Gebläse derart betreibbar ist, dass innerhalb des Gehäuses eine auf das hintere Modulende gerichtete Luftströmung erzeugbar ist, sodass eine Luftströmung am hinteren Modulende resultiert. Bei dieser Ausführungsform ist der Spalt günstigerweise vorne und/oder seitlich offen. Die Luft wird somit relativ nahe des vorderen Modulendes angesaugt und nach hinten abgegeben. Innerhalb des Gehäuse läuft sie somit im Wesentlichen antiparallel zur Infrarotstrahlung. Diese Ausführungsform liefert eine maximale Kühlleistung. Es hat sich nämlich erwiesen, dass mittels eines angesaugten Luftstroms höhere Kühlraten erzielbar sind als mit einem in den Kühlungsbereich eingepressten Luftstrom.

Allerdings ist bei dieser Ausführungsform die Weiterverwendung des erwärmten Luftstroms komplizierter. Er muss in ein Luftleitsystem eingekoppelt werden, das z.B. strömungstechnisch mit einer üblichen Bereichsheizung, z.B. einer Warmluft-Fußraumheizung gekoppelt ist. Aus Bauraumgründen ist daher bevorzugt vorgesehen, dass die Strömungsrichtung der Luftströmung an ihrem Strömungsausgang quer zur Strahlungsrichtung der Infrarotstrahlung gerichtet ist. Mit anderen Worten wird die Luftströmung vor Verlassen des Moduls bevorzugt im Wesentlichen senkrecht abgelenkt. Hierdurch verringert sich die vor allem die axiale Bautiefe.

Bevorzugt ist vorgesehen, dass das Gebläse mittels eines Abstandhalters beabstandet von der Einheit aus Infrarotemitter und Infrarotreflektor an dieser fixiert ist. Alternativ kann das Gebläse auch am Gehäuse fixiert sein. Während die erstgenannte Variante den Vorteil hat, dass die Konstruktion aus Gebläse, Abstandshalter, Infrarotemitter und Infrarotreflektor als tragende Einheit des Moduls dienen kann, auf die sich ein sehr leichtes Gehäuse aufstecken lässt, hat die zweite Variante, die ein stabileres, tragenderes Gehäuse verlangt, den Vorteil, dass es möglich ist, wie bei einer bevorzugten Ausführungsform vorgesehen, die Einheit aus Infrarotemitter und Infrarotreflektor mittels einer feststellbaren, kardanischen Aufhängung am Gehäuse zu fixieren. Eine derartige Zwei-Achsen-Aufhängung erlaubt eine variable Ausrichtung der Strahlereinheit im Modul.

Wie erwähnt, ist der bevorzugte Einsatz des erfindungsgemäßen Infrarotstrahlermoduls derjenige als Zusatzheizeinrichtung in einem Kraftfahrzeug, wobei die Betriebsspannung für den Infrarotemitter und das Gebläse an die Bordnetzspannung des Kraftfahrzeugs angepasst sind. Derartige Zusatzheizeinrichtungen, die aufgrund ihres geringen Bauraumbedarfs und ihrer geringen Kosten an vielen unterschiedlichen Stellen im Kraftfahrzeug eingesetzt werden können, sind auch energieeffizient und können, wie bevorzugt vorgesehen, so ausgestaltet sein, dass der Infrarotemitter und das Gebläse elektrisch so dimensioniert sind, dass die Leistungsaufnahme des Infrarotstrahlermoduls zwischen 5 und 15 Watt liegt. Dies genügt für eine von den Fahrzeuginsassen als angenehm empfundene, lokale Heizung und belastet den Energiehaushalt des Kraftfahrzeugs nur unwesentlich.

Weitere Merkmale und Vorteile der Erfindung ergeben sich aus der nachfolgenden, speziellen Beschreibung und den Zeichnungen.

Es zeigen:
- Figur 1: eine schematische Schnittdarstellung eines erfindungsgemäßen Infrarotstrahlermoduls,
- Figur 2: eine erste perspektivische Darstellung einer Ausführungsform eines erfindungsgemäßen Infrarotstrukturmoduls,
- Figur 3: eine zweite perspektivische Darstellung des Moduls von Figur 2,
- Figur 4: eine Explosionsdarstellung des Moduls gem. den Figuren 2 und 3,
- Figur 5: eine erste perspektivische Darstellung einer zweiten Ausführungsform eines erfindungsgemäßen Infrarotstrahlermoduls,
- Figur 6: eine zweite perspektivische Darstellung des Moduls von Figur 5,
- Figur 7: eine Explosionsdarstellung des Moduls gem. den Figuren 5 und 6,
- Figur 8: eine perspektivische Darstellung einer dritten Ausführungsform eines erfindungsgemäßen Infrarotstrahlermoduls,
- Figur 9: eine Schnittdarstellung des Moduls von Figur 8.

Gleiche Bezugszeichen in den Figuren deuten auf gleiche oder analoge Elemente hin.

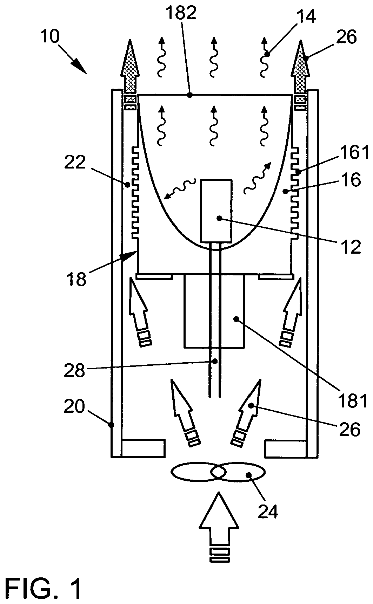

Figur 1 zeigt eine schematische Schnittdarstellung eines erfindungsgemäßen Infrarotstrahlermoduls 10. Das Modul 10 umfasst einen Infrarotemitter 12, der bei Betrieb Infrarotstrahlung 14 emittiert, wobei als Infrarotstrahlung hier elektromagnetische Strahlung im Spektralbereich zwischen etwa 800 und 3000 Nanometer bezeichnet wird.

Der Infrarotemitter ist im Inneren eines die Infrarotstrahlung 14 reflektierenden Infrarotreflektors 16 angeordnet, der Infrarotreflektor 16 hat eine vorzugsweise paraboloide Innenform, die, wie in Figur 1 ansatzweise angedeutet, Infrarotstrahlung 14, die nicht in Richtung des vorderen, in Figur 1 oberen Modulendes emittiert wird, in ihrer Ausrichtung dorthin korrigiert. Die spezielle Materialwahl des Reflektors, beispielsweise infrarotreflektierend beschichtete Keramik, kann vom Fachmann in Ansehung der Erfordernisse des Einzelfalls vorgenommen werden. Bei der gezeigten Ausführungsform weist der Reflektor 16 eine im Wesentlichen zylindrische Außenform auf, die mit Kühlkörpern, insbesondere seitlichen Kühlrippen 161 versehen ist. Wie in Figur 1 erkennbar, sind der Infrarotemitter 12 und der Infrarotreflektor 16 zu einer Strahlereinheit 18 verbunden, die einen luftundurchlässigen rückwärtigen Sockel 181 aufweist. An ihrem vorderen Ende ist die Strahlereinheit 18 durch eine optionale Abschlussscheibe 182, die für die Infrarotstrahlung 14 transparent ist, abgeschlossen.

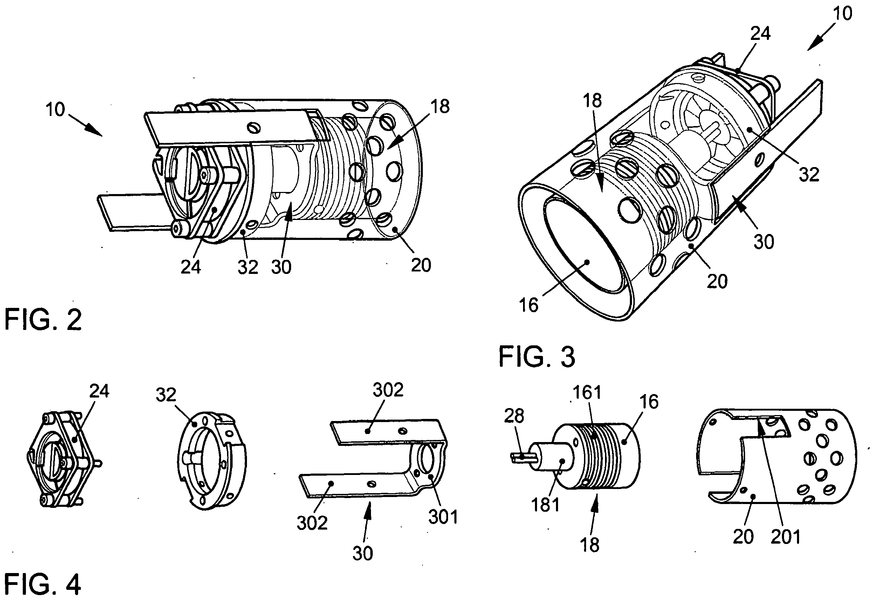

Die Strahlereinheit 18 ist von einem im Wesentlichen zylindrischen Gehäuse 20 umgeben, wobei die mechanische Verbindung zwischen Strahlereinheit 18 und Gehäuse 20 in Figur 1 aus Gründen der Übersichtlichkeit nicht dargestellt ist. Diesbezüglich wird auf die Detaildarstellungen der Figuren 2 bis 7 verwiesen. Zwischen dem Gehäuse 20 und der Strahlereinheit 18 existiert ein Luftspalt 22.

Hinter der Strahlereinheit 18 ist ein Gebläse 24 angeordnet, dessen mechanische Kopplung mit dem Gehäuse bzw. der Strahlereinheit 18 in Figur 1 aus Gründen der Übersichtlichkeit nicht dargestellt ist. Diesbezüglich auf die Detaildarstellungen der Figuren 2 bis 7 verwiesen. Mit dem Gebläse 24 ist eine Luftströmung 26 erzeugbar, die innerhalb des Gehäuses verläuft und die Strahlereinheit 18, insbesondere den Infrarotreflektor 16 mit seinen Kühlrippen 161, umspült. Hierdurch wird die Strahlereinheit 18 gekühlt, und die Luftströmung 26 erwärmt. Bei Betrieb sendet das Infrarotstrahlermodul 10 an seinem vorderen, in Figur 1 oberen Ende somit gerichtete Infrarotstrahlung 14 und einen gerichteten, erwärmten Luftstrom 26 aus. Die energetische Versorgung von Gebläse 24 und Infrarotemitter 12 ist durch die elektrische Versorgungsleitungen 28 in Figur 1 nur angedeutet. Der Fachmann wird entsprechende Maßnahmen in Ansehung der Erfordernisse des Einzelfalls treffen.

Die Figuren 2 und 3 zeigen zwei perspektivische Darstellungen einer realistischen Ausführungsform eines Infrarotstrahlermoduls 10 gem. dem Schema von Figur 1. Bzgl. der bereits im Zusammenhang mit Figur 1 beschriebenen Elemente, die in den Figuren 2 bis 4 mit denselben Bezugszeichen versehen sind, wird auf die obige Erläuterung verwiesen. Die Figuren 2 bis 4 dienen insbesondere der Veranschaulichung der mechanischen Kopplung der einzelnen Elemente. Hierzu ist ein Abstandshalter 30 vorgesehen, der einen ringförmigen Zentralbereich 301 und zwei mit diesem starr verbundene Beine 302 aufweist. Der ringförmige Zentralbereich ist mit der Rückseite der Strahlereinheit 18 verbunden, beispielsweise verschraubt oder vernietet, wobei der Sockel 181 bei der gezeigten Ausführungsform den ringförmigen Zentralteil 301 durchsetzt. Der Durchmesser des ringförmigen Zentralteils 301 ist so gewählt, dass im Montageendzustand der Luftspalt 22 zwischen Strahlereinheit 18 und Gehäuse 20 nicht oder nicht wesentlich verlegt ist. Die Beine 302 stehen jedoch radial weiter ab und dienen zur beabstandeten Fixierung eines Ringträgers 32. An dessen rückwärtiger Seite, d.h. links in den Figuren 2 und 4 bzw. rechts in Figur 3, ist das Gebläse 24 festgelegt. Bei dem Gebläse 24 kann es sich um einen herkömmlichen Elektroniklüfter handeln, wie er massenhaft beispielsweise in Computern zur Kühlung von Netzteilen und Platinen eingesetzt wird. Derartige Massenware ist kostengünstig und dabei gleichzeitig zuverlässig und leise im Betrieb. Insbesondere müssen keine erhöhten Temperaturbeständigkeitsanforderungen gestellt werden, da das Gebläse 24 hinreichend von der sich bei Betrieb erhitzenden Strahlereinheit 18 entfernt ist und von dem selbsterzeugten Luftstrom stets gekühlt wird.

Das Gehäuse 20, welches bei der gezeigten Ausführungsform als perforierter Blechzylinder ausgebildet ist, wird von vorne, d.h. rechts in den Figuren 2 und 4 bzw. links in Figur 3 aufgeschoben, wobei axiale Ausschnitte 201 so mit den Beinen 302 des Abstandshalters 30 korrespondieren, dass das Gehäuse drehfest sitzt. Zur weiteren Sicherung kann es mit dem Ringträger 32 verbunden werden, beispielsweise durch Verschraubung oder Vernietung.

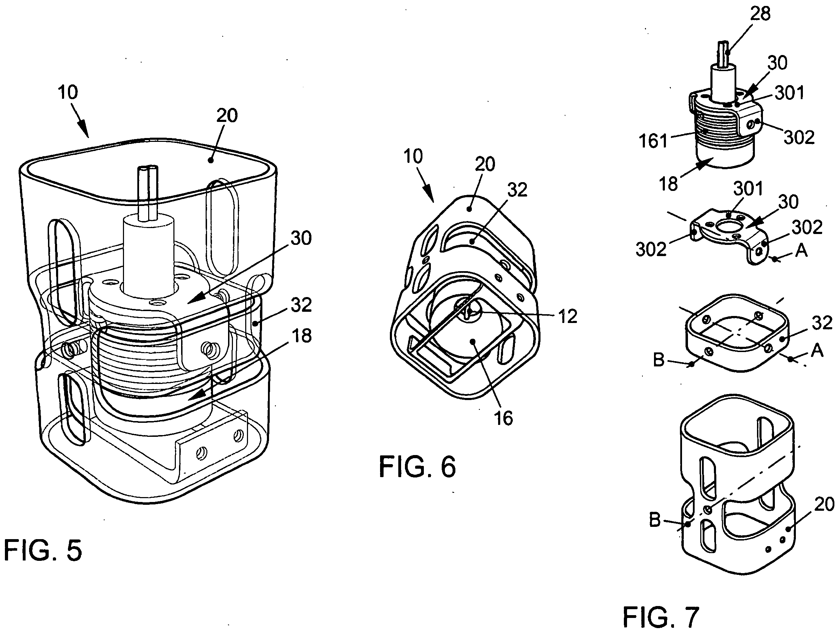

In den Figuren 5 bis 7 ist eine weitere Ausführungsform eines erfindungsgemäßen Infrarotstrahlermoduls 10 gezeigt. Auch hier wird auf die Erläuterung zu Figur 1 verwiesen. Die Darstellung der Figuren 5 bis 7 dient im Wesentlichen der Illustration einer alternativen mechanischen Fixierung der Strahlereinheit 18 am Gehäuse 20. Das Gebläse 24 ist aus Gründen der Übersichtlichkeit in den Figuren 5 bis 7 nicht dargestellt, kann jedoch vom Fachmann in Ansehung der obigen Erläuterungen gedanklich ergänzt werden. Auch bei der Ausführungsform der Figuren 5 bis 7 ist die Strahlereinheit 18 mit einem Abstandshalter 30 verbunden, der einen ringförmigen Zentralbereich 301 und zwei seitliche Beine 302 aufweist. Wie auch bei der Ausführungsform der Figuren 2 bis 4 sind die Beine 302 mit einem Ringträger 32 verbunden, wobei der Ringträger 32 bei der hier gezeigten Ausführungsform nicht zusätzlich der Halterung des Gebläses 24 dient. Vielmehr ist der Ringträger 32 hier Bestandteil einer kardanischen Aufhängung des Abstandshalters 30. So weisen die einander diametral gegenüberliegenden Beine 302 Bohrungen auf, die auf der gemeinsamen Achse A liegen. Korrespondierende Bohrungen im Ringträger 32 lassen eine um die Achse A schwenkbare Verbindung zwischen dem Abstandshalter 30 und dem Ringträger 32 zu. Der Ringträger 32 weist weiter zwei Bohrungen auf, die auf einer senkrecht zur Achse A liegenden Achse B liegen. Korrespondierende Bohrungen finden sich in der Wand des Gehäuses 20, wodurch eine um die Achse B schwenkbare Verbindung zwischen dem Ringträger 32 und dem Gehäuse 20 ermöglicht wird. Im Ergebnis ist somit die Strahlereinheit 18 um zwei senkrecht zueinander stehende Achsen innerhalb des Gehäuses verschwenkbar. Bevorzugt ist die erläuterte kardanische Aufhängung fixierbar, beispielsweise durch entsprechend festes Anziehen von Befestigungsschrauben. In der Regel wird die gewünschte Ausrichtung der Strahlereinheit 18 nämlich nicht vom Endkunden, beispielsweise dem Käufer eines Kraftfahrzeugs vorgenommen. Vielmehr wird die Ausrichtung bei Montage der erfindungsgemäßen Infrarotstrahlermodule eingestellt, um Unterschiede zwischen räumlichen möglichen Einbaulagen und gewünschter Infrarotabstrahlungsrichtung auszugleichen.

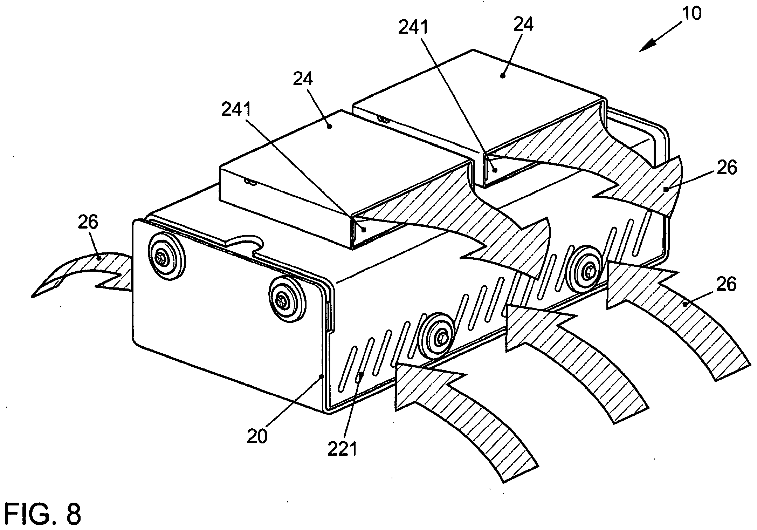

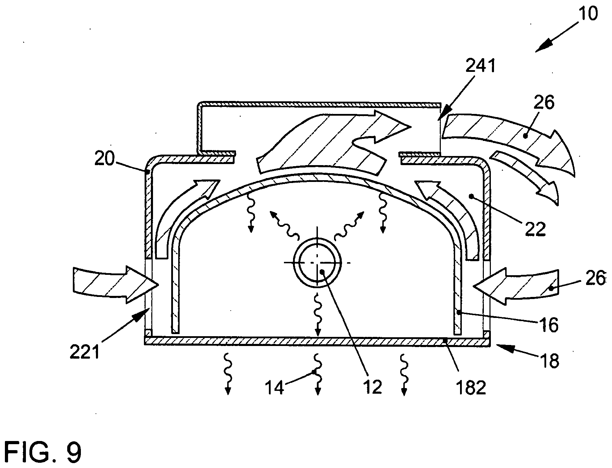

Figur 8 zeigt eine perspektivische Darstellung einer weiteren Ausführungsform des erfindungsgemäßen Infrarotstrahlermoduls, welche sich von den zuvor beschriebenen Ausführungsformen im Wesentlichen durch die Betriebsrichtung des Gebläses 24 unterscheidet. Wurde bei den zuvor beschriebenen Ausführungsformen die Luft im Wesentlichen aus dem hinteren Bereich des Moduls angesaugt und in dessen vorderen Bereich ausgeblasen, so ist bei der in den Figuren 8 und 9 dargestellten Ausführungsform die Richtung des Luftstroms umgekehrt. Auch bei dieser Ausführungsform ist ein Infrarotemitter 12 im Inneren eines Infrarotreflektors 16 angeordnet, dessen Form so auf die Form und Erstreckung des Infrarotemitters 12 abgestimmt ist, dass sich eine gerichtete Infrarotstrahlung 14 ergibt. Die Hauptstrahlungsrichtung der Infrarotstrahlung 14 definiert das vordere Ende der Strahlereinheit 18 sowie des gesamten Infrarotstrahlermoduls 10. Bei der gezeigten Ausführungsform ist, wie insbesondere in Figur 9, die eine Schnittdarstellung des Moduls 10 von Figur 8 zeigt, erkennbar, die Strahlereinheit 18 vorne mit einer grundsätzlich optionalen Abschlussscheibe 182 abgeschlossen. Diese besteht vorzugsweise aus luftundurchlässigem und infrarotdurchlässigem Material, kann jedoch auch beispielsweise als Gitterstruktur ausgestaltet sein.

Die Strahlereinheit 18 ist von einem Gehäuse 20 umgeben, dessen Wandung beabstandet von der Wandung des Reflektors 16 angeordnet ist. Der sich ergebende Luftspalt 22 weist seitliche Öffnungen auf, die bei der gezeigten Ausführungsform als Lüftungsschlitze 221 ausgebildet sind.

Bei Betrieb des nicht näher dargestellten Gebläses 24 wird ein Luftstrom 26 durch die Lufteinlassschlitze 221 angesaugt und durch einen Luftauslassschlitz 241 im rückwärtigen Bereich des Moduls 10 wieder ausgeblasen. Zwischen den Lufteinlassschlitzen 221 und den Luftauslassschlitzen 241 umströmt der Luftstrom 26 den Reflektor 16, kühlt ihn dabei ab und wärmt sich selber auf. Dem Luftauslassschlitz 241 entströmt somit ein erwärmter Luftstrom 26. Dieser kann in weitere, insbesondere fahrzeugfeste, in den Figuren nicht dargestellte Luftleitkanäle zur weiteren Verteilung im Kraftfahrzeug eingekoppelt werden. Bei der gezeigten Ausführungsform sind die Luftauslassschlitze 241 seitlich gerichtet, sodass der ausströmende Luftstrom 26 im Wesentlichen senkrecht zur Strahlrichtung der Infrarotstrahlung 14 gerichtet ist. Hierdurch kann die Tiefe des Strahlermoduls 10 gegenüber Ausführungsformen reduziert werden, bei denen der Luftstrom 26 antiparallel zur Strahlrichtung der Infrarotstrahlung 14 ausgeblasen wird.

Eine mögliche Verwendung des Strahlermoduls 10 der Figuren 8 und 9 ist im Rahmen der Fußraumheizung eines Kraftfahrzeugs, wobei die Infrarotstrahlung 14 auf die Füße eines Fahrzeuginsassen gerichtet ist und die erwärmte Abluft in die in der Regel ohnehin vorhandenen Kanäle der Fußraumlüftung eingekoppelt wird. Selbstverständlich sind auch andere Anordnungen denkbar, beispielsweise im Bereich der Armaturentafel, wo die Infrarotstrahlung 14 zur Erwärmung von Gesicht und/oder Händen des Fahrers und die erwärmte Abluft zur Erwärmung und Trocknung der Windschutzscheibe verwendet werden kann.

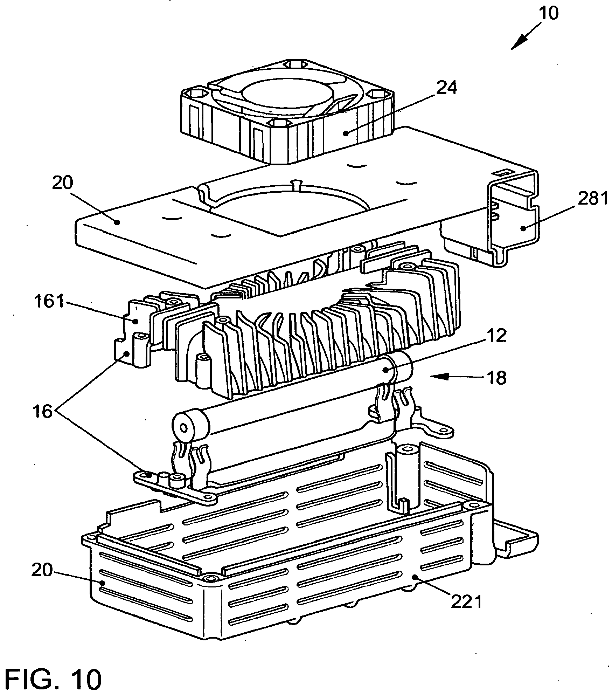

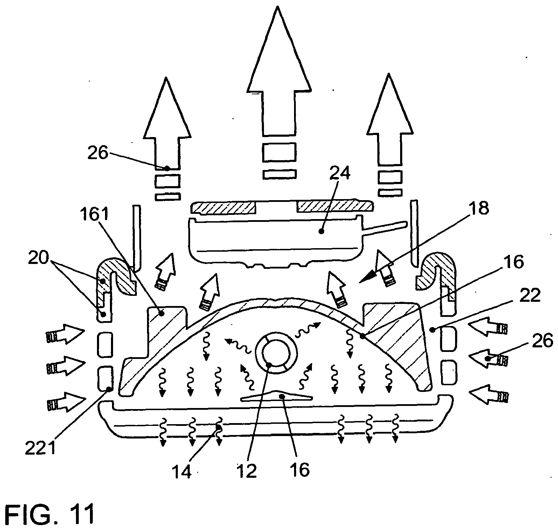

Eine weitere, ähnliche Ausführungsform ist in den Figuren 10 und 11 dargestellt. Sie unterscheidet sich von der Ausführungsform der Figuren 8 und 9 im Wesentlichen durch drei Merkmale, nämlich die gerade nach hinten, nicht umgelenkte Ausblasrichtung des Luftstroms 26, die Ersetzung der Abschlussscheibe 182 durch ein Abschlussgitter und die Mehrteiligkeit des Reflektors. Letzterer weist im Bereich des Abschlussgitters einen streifenförmigen Zusatzspiegel auf, der Infrarotlicht nach schräg hinten zurückspiegelt, wo es erneut nach vorne reflektiert wird. Hierdurch wird eine direkte Strahlung vom Infrarotemitter 12 abgeschirmt, sodass die zu bestrahlenden Ziele nur von indirekter Infrarotstrahlung erreicht werden. Dies führt zu einer homogeneren Wärmestrahlungsfeld. Selbstverständlich kann dieses Merkmal auch für die übrigen gezeigten Ausführungsformen nutzbar gemacht werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Infrarotstrahlermodul
- 12: Infrarotemitter
- 14: Infrarotstrahlung
- 16: Infrarotreflektor
- 161: Kühlrippen von 16
- 18: Strahlereinheit
- 181: rückwärtiger Sockel von 18
- 182: optionale Abschlussscheibe
- 20: Gehäuse
- 22: Luftspalt
- 24: Gebläse
- 26: Luftstrom
- 28: elektrische Versorgungsleitungen
- 281: Kanal für 28
- 221: Lufteinlassschlitz
- 30: Abstandhalter
- 301: Zentralteil von 30
- 302: Bein von 30
- 32: Ringträger
- 241: Luftauslassschlitz

## Patentansprüche

1. Zusatzheizeinrichtung eines Kraftfahrzeugs mit einem Infrarotstrahlermodul zur Abgabe gerichteter Infrarotstrahlung (14) an seinem vorderen Modulende sowie einer erwärmten Luftströmung (26), umfassend
- einen elektrischen Infrarotemitter (12) zur Erzeugung der Infrarotstrahlung (14),
- einen den Infrarotemitter (12) seitlich umschließenden Infrarotreflektor (16) zur Ausrichtung der von dem Infrarotemitter (12) erzeugten Infrarotstrahlung (14) in Richtung des vorderen Modulendes,
- ein den Infrarotreflektor (16) seitlich umschließendes Gehäuse (20) und
- ein hinter dem Infrarotemitter (12) und dem Infrarotreflektor (16) angeordnetes Gebläse (24) zur Erzeugung einer das Gehäuses (20) durchsetzenden Luftströmung (26),
**dadurch gekennzeichnet,**
**dass** der Infrarotemitter (12) und der Infrarotreflektor (16) als eine zum Gebläse (24) hin luftundurchlässige Einheit (18) verbunden sind und zwischen dem Infrarotreflektor (16) und dem Gehäuse (20) ein zum Moduläußeren offener, mit dem Gebläse (24) strömungsleitend verbundener Spalt (22) angeordnet ist.

2. Zusatzheizeinrichtung nach Anspruch 1,
**dadurch gekennzeichnet,**
**dass** der Spalt (22) vorne offen und das Gebläse (24) derart betreibbar ist, dass innerhalb des Gehäuses (20) eine auf das vordere Modulende gerichtete Luftströmung (26) erzeugbar ist, sodass am vorderen Modulende eine mit der Infrarotstrahlung (14) gleichgerichtete Luftströmung (26) resultiert.

3. Zusatzheizeinrichtung nach Anspruch 1,
**dadurch gekennzeichnet,**
**dass** das Gebläse (24) derart betreibbar ist, dass innerhalb des Gehäuses (20) eine auf das hintere Modulende gerichtete Luftströmung (26) erzeugbar ist, sodass eine Luftströmung (26) am hinteren Modulende resultiert.

4. Zusatzheizeinrichtung nach Anspruch 3,
**dadurch gekennzeichnet,**
**dass** der Spalt (22) vorne und/oder seitlich offen ist.

5. Zusatzheizeinrichtung nach einem der Ansprüche 3 bis 4,
**dadurch gekennzeichnet,**
**dass** die Strömungsrichtung der Luftströmung (26) an ihrem Strömungsausgang quer zur Strahlungsrichtung der Infrarotstrahlung (14) gerichtet ist.

6. Zusatzheizeinrichtung nach einem der vorangehenden Ansprüche,
**dadurch gekennzeichnet,**
**dass** der Spalt (22) als ein den Infrarotreflektor (16) umlaufender Ringspalt ausgebildet ist.

7. Zusatzheizeinrichtung nach einem der vorangehenden Ansprüche,
**dadurch gekennzeichnet,**
**dass** der Infrarotreflektor (16) an seinem vorderen Ende mittels einer für die von dem Infrarotemitter (12) emittierten Infrarotstrahlung (14) transparenten, luftundurchlässigen Schutzscheibe (182) verschlossen ist.

8. Zusatzheizeinrichtung nach einem der vorangehenden Ansprüche,
**dadurch gekennzeichnet,**
**dass** das Gebläse (24) mittels eines Abstandhalters (30) beanstandet von der Einheit (18) aus Infrarotemitter (12) und Infrarotreflektor (16) an dieser fixiert ist.

9. Zusatzheizeinrichtung nach einem der Ansprüche 1 bis 7,
**dadurch gekennzeichnet,**
**dass** das Gebläse (24) an dem Gehäuse (20) fixiert ist.

10. Zusatzheizeinrichtung nach einem der vorangehenden Ansprüche,
**dadurch gekennzeichnet,**
**dass** die Einheit (18) aus Infrarotemitter (12) und Infrarotreflektor (16) mittels einer feststellbaren, kardanischen Aufhängung am Gehäuse (20) fixiert ist.

11. Verwendung einer Zusatzheizeinrichtung nach einem der vorangehenden Ansprüche in einem Kraftfahrzeug, wobei die Betriebsspannung für den Infrarotemitter (12) und das Gebläse (24) an die Bordnetzspannung des Kraftfahrzeugs angepasst sind.

12. Verwendung nach Anspruch 11,
**dadurch gekennzeichnet,**
**dass** der Infrarotemitter (12) und das Gebläse (24) elektrisch so dimensioniert sind, dass die Leistungsaufnahme des Infrarotstrahlermoduls (10) zwischen 5 und 15 Watt liegt.

## Claims

1. Additional heater device for a motor vehicle, having an infrared radiator module for outputting directional infrared radiation (14) at its front module end as well as a heated air flow (26), comprising
- an electric infrared emitter (12) for generating the infrared radiation (14),
- an infrared reflector (16) which encloses the infrared emitter (12) laterally and has the purpose of orientating the infrared radiation (14), generated by the infrared emitter (12), in the direction of the front module end,
- a housing (20) which surrounds the infrared reflector (16) laterally, and
- a blower (24) which is arranged behind the infrared emitter (12) and the infrared reflector (16) and has the purpose of generating an air flow (26) which passes through the housing (20),
**characterized**
**in that** the infrared emitter (12) and the infrared reflector (16) are connected as a unit (18) which is impermeable to air in the direction of the blower (24), and a gap (22) which is open towards the exterior of the module and is connected to the blower (24) in a current-connecting fashion is arranged between the infrared reflector (16) and the housing (20).

2. Additional heater device according to Claim 1,
**characterized**
**in that** the gap (22) is open at the front, and the blower (24) can be operated in such a way that an air flow (26) which is directed towards the front module end can be generated within the housing (20), with the result that an air flow (26) which is directed in the same direction as the infrared radiation (14) results at the front module end.

3. Additional heater device according to Claim 1,
**characterized**
**in that** the blower (24) can be operated in such a way that an air flow (26) which is directed towards the rear module end can be generated within the housing (20), with the result that an air flow (26) results at the rear module end.

4. Additional heater device according to Claim 3,
**characterized**
**in that** the gap (22) is open at the front and/or laterally.

5. Additional heater device according to one of Claims 3 and 4,
**characterized**
**in that** the direction of flow of the air flow (26) at its flow outlet is directed transversely with respect to the radiating direction of the infrared radiation (14).

6. Additional heater device according to one of the preceding claims,
**characterized**
**in that** the gap (22) is embodied as an annular gap which surrounds the infrared reflector (16).

7. Additional heater device according to one of the preceding claims,
**characterized**
**in that** the infrared reflector (16) is closed off at its front end by means of a protective plate (182) which is impermeable to air and is transparent to the infrared radiation (14) which is emitted by the infrared emitter (12).

8. Additional heater device according to one of the preceding claims,
**characterized**
**in that** the blower (24) is secured to the unit (18) composed of the infrared emitter (12) and the infrared reflector (16) and is spaced apart from said unit (18) by means of a spacer element (30).

9. Additional heater device according to one of Claims 1 to 7,
**characterized**
**in that** the blower (24) is secured to the housing (20).

10. Additional heater device according to one of the preceding claims,
**characterized**
**in that** the unit (18) composed of the infrared emitter (12) and the infrared reflector (16) is secured to the housing (20) by means of a cardanic suspension means which can be locked.

11. Use of an additional heater device according to one of the preceding claims in a motor vehicle, wherein the operating voltage for the infrared emitter (12) and the operating voltage for the blower (24) are adapted to the on-board power system voltage of the motor vehicle.

12. Use according to Claim 11,
**characterized**
**in that** the infrared emitter (12) and the blower (24) are dimensioned electrically in such a way that the power consumption of the infrared radiator module (10) is between 5 and 15 watts.

## Revendications

1. Dispositif de chauffage supplémentaire d'un véhicule automobile, comprenant un module diffuseur d'infrarouges destiné à délivrer un rayonnement infrarouge (14) dirigé au niveau de son extrémité de module avant ainsi qu'un courant d'air chauffé (26), comprenant
- un émetteur d'infrarouges (12) électrique destiné à générer le rayonnement infrarouge (14),
- un réflecteur d'infrarouges (16) entourant latéralement l'émetteur d'infrarouges (12) et destiné à diriger le rayonnement infrarouge (14) généré par l'émetteur d'infrarouges (12) en direction de l'extrémité de module avant,
- un boîtier (20) entourant latéralement le réflecteur d'infrarouges (16) et
- un ventilateur (24) disposé derrière l'émetteur d' infrarouges (12) et le réflecteur d'infrarouges (16), destiné à générer un courant d'air (26) qui charge le boîtier (20),
**caractérisé en ce**
**que** l'émetteur d'infrarouges (12) et le réflecteur d'infrarouges (16) sont reliés en une unité (18) imperméable à l'air en direction du ventilateur (24) et un interstice (22) relié en conduction fluidique avec le ventilateur (24), ouvert en direction de l'extérieur du module, est disposé entre le réflecteur d'infrarouges (16) et le boîtier (20).

2. Dispositif de chauffage supplémentaire selon la revendication 1, **caractérisé en ce que** l'interstice (22) est ouvert à l'avant et le ventilateur (24) peut être utilisé de telle sorte qu'un courant d'air (26) dirigé vers l'extrémité de module avant peut être généré à l'intérieur du boîtier (20), de sorte qu'il en résulte à l'extrémité de module avant un courant d'air (26) dirigé dans la même direction que le rayonnement infrarouge (14).

3. Dispositif de chauffage supplémentaire selon la revendication 1, **caractérisé en ce que** le ventilateur (24) peut être utilisé de telle sorte qu'un courant d'air (26) dirigé vers l'extrémité de module arrière peut être généré à l'intérieur du boîtier (20), de sorte qu'il en résulte un courant d'air (26) à l'extrémité de module arrière.

4. Dispositif de chauffage supplémentaire selon la revendication 3, **caractérisé en ce que** l'interstice (22) est ouvert à l'avant et/ou latéralement.

5. Dispositif de chauffage supplémentaire selon l'une des revendications 3 à 4, **caractérisé en ce que** la direction d'écoulement du courant d'air (26) à sa sortie d'écoulement est dirigée transversalement par rapport à la direction de rayonnement du rayonnement infrarouge (14).

6. Dispositif de chauffage supplémentaire selon l'une des revendications précédentes, **caractérisé en ce que** l'interstice (22) est réalisé sous la forme d'un interstice annulaire circulaire autour du réflecteur d'infrarouges (16).

7. Dispositif de chauffage supplémentaire selon l'une des revendications précédentes, **caractérisé en ce que** le réflecteur d'infrarouges (16) est fermé au niveau de son extrémité avant au moyen d'une plaque de protection (182) imperméable à l'air, transparente pour le rayonnement infrarouge (14) émis par l'émetteur d'infrarouges (12).

8. Dispositif de chauffage supplémentaire selon l'une des revendications précédentes, **caractérisé en ce que** le ventilateur (24) est fixé à l'unité (18) composée de l'émetteur d'infrarouges (12) et du réflecteur d'infrarouges (16) en étant espacé de celle-ci au moyen d'une entretoise (30).

9. Dispositif de chauffage supplémentaire selon l'une des revendications 1 à 7, **caractérisé en ce que** le ventilateur (24) est fixé au boîtier (20).

10. Dispositif de chauffage supplémentaire selon l'une des revendications précédentes, **caractérisé en ce que** l'unité (18) composée de l'émetteur d'infrarouges (12) et du réflecteur d'infrarouges (16) est fixée au boîtier (20) au moyen d'une suspension à cardan immobilisable.

11. Utilisation d'un dispositif de chauffage supplémentaire selon l'une des revendications précédentes dans un véhicule automobile, la tension de service de l'émetteur d'infrarouges (12) et du ventilateur (24) étant adaptée à la tension du réseau de bord du véhicule automobile.

12. Utilisation selon la revendication 11, **caractérisée en ce que** l'émetteur d'infrarouges (12) et le ventilateur (24) sont dimensionnés électriquement de telle sorte que la puissance consommée du module diffuseur d'infrarouges (10) est comprise entre 5 et 15 watts.
